# EUROPÄISCHE PATENTSCHRIFT

(11) **EP 2 507 802 B1**
(45) Veröffentlichungstag und Bekanntmachung des Hinweises auf die Patenterteilung: **27.12.2017**
(21) Anmeldenummer: 10763190.5
(22) Anmeldetag: 07.10.2010
(51) Int. Cl.: H01F 7/08, B22F 7/06, F02M 51/06, H01F 41/02, B22F 3/22

(54) **ELEKTROMAGNETISCH BETÄTIGBARES VENTIL**
SOLENOID VALVE
ÉLECTROVANNE

(30) Priorität: 04.12.2009 DE 102009047525
(43) Veröffentlichungstag der Anmeldung: 10.10.2012
(73) Patentinhaber: Robert Bosch GmbH, 70442 Stuttgart (DE)
(72) Erfinder: POHLMANN, Jens, 74321 Bietigheim-Bissingen (DE); GRANER, Juergen, 74372 Sersheim (DE)
(86) Internationale Anmeldenummer: PCT/EP2010/065024
(87) Internationale Veröffentlichungsnummer: WO 2011/067021

(56) Entgegenhaltungen:
- EP-A1- 2 172 641
- WO-A2-2010/088109
- DE-A1- 10 031 923
- DE-A1- 10 063 549
- DE-A1- 19 924 814
- US-A1- 2004 118 952

## Beschreibung

### Stand der Technik

Die vorliegende Erfindung betrifft ein elektromagnetisch betätigbares Ventil, insbesondere ein Kraftstoffeinspritzventil, mit einem Magnetaktor, sowie ein Verfahren zur Herstellung von Bauteilen eines Magnetaktors, z.B. eines Magnetankers.

Hochdruckeinspritzventile des Standes der Technik sind im Wesentlichen als herkömmliche Magnetschaltventile mit einer Spule und Bauteilen eines Magnetaktors, z.B. Magnetanker, Innenpol, Außenpol, aufgebaut, die als Drehteile aus einem weichmagnetischen Stangenmaterial gefertigt werden. Durch die elektrischen Eigenschaften des Materials und die um 360° geschlossene Kontur der Bauteile kommt es beim Aufbau und Abbau des Magnetfelds im Betrieb zu Wirbelstromverlusten und demzufolge zu einer Minderung der Schaltzeit bzw. Dynamik des Kraftstoffeinspritzventils.

Aus der US 2004/0118952 A1 ist bereits ein elektromagnetisch betätigbares Ventil, insbesondere zur Einspritzung von Kraftstoff, bekannt, das einen Magnetaktor mit mehreren Bauteilen umfasst, wobei ein fester Magnetkern eine Vielzahl von Sektoren aus weichmagnetischem Material und eine Vielzahl von isolierenden Trennstegen in Form von Beschichtungen auf den Kontaktoberflächen der Sektoren aufweist. Dabei ist zwischen zwei benachbarten Sektoren jeweils eine Beschichtung aufgebracht, welche die benachbarten Sektoren elektrisch vollständig voneinander trennt.

Aus der DE 100 63 549 A1 ist bereits ein Verfahren zur Herstellung von Elektromagneten mit mehrteilig ausgeführtem Magnetjoch bekannt, bei dem zwischen den Jochteilen zur Unterdrückung von Wirbelströmen ein Keramiksubstrat angeordnet wird.

Aus der DE 199 24 814 A1 ist bereits ein Aktor zur elektromagnetischen Ventilsteuerung bekannt, bei dem die beiden Joche der Elektromagnete geschlitzt ausgeführt sind, indem die Joche aus mehreren massiven, miteinander verbundenen Teilen bestehen.

### Offenbarung der Erfindung

Das erfindungsgemäße elektromagnetisch betätigbare Ventil mit den Merkmalen des Anspruchs 1 weist demgegenüber den Vorteil auf, dass es Bauteile eines Magnetaktors, wie einen Magnetanker aufweist, die eine erhebliche Reduzierung der Wirbelstromverluste bei Magnetfeldänderungen und eine deutlich verkürzte Schaltzeit des Ventils ermöglichen. Dies wird erfindungsgemäß dadurch erreicht, dass das Ventil mindestens ein Bauteil eines Magnetaktors mit einer Vielzahl von Sektoren aus weichmagnetischem Material und eine Vielzahl von isolierenden Trennstegen aufweist, wobei zwischen zwei benachbarten Sektoren jeweils ein Trennsteg angeordnet ist, welcher die benachbarten Sektoren elektrisch vollständig voneinander trennt. Die Bauteile des Magnetaktors weisen somit mindestens zwei weichmagnetische Sektoren und zwei isolierende Trennstege auf. Der Magnetanker weist eine mittige Durchgangsöffnung auf, in der eine Ventilnadel angeordnet ist, die ein entlang der Achse A axial bewegliches Ventilteil bilden, wobei die Sektoren mit ihren dazwischenliegenden Trennstegen in Umfangsrichtung angeordnet sind und die Trennstege hierbei aus einem Keramik umfassenden Material hergestellt sind. Aufgrund der elektrisch nicht leitenden Eigenschaften des keramischen Materials wird eine sichere elektrische Trennung bzw. Isolation der einzelnen angrenzenden Sektoren der Bauteile eines Magnetaktors gewährleistet.

Weiterhin bevorzugt umfasst das Ventil mindestens einen Magnetanker des Magnetaktors mit genau vier Sektoren und vier Trennstegen. Hierdurch wird bereits durch eine kleine Anzahl von Sektoren und Trennstegen eine drastische Reduzierung der Wirbelstromverluste bei Magnetfeldänderungen erreicht.

Gemäß einer weiteren bevorzugten Ausgestaltung weisen die Trennstege eine Breite auf, welche derart gewählt ist, dass benachbarte Sektoren gerade sicher elektrisch voneinander getrennt sind. Durch die Minimierung der Breite und des Materialanteils der Trennstege geht nur wenig weichmagnetisches Material des Magnetankers verloren, wodurch eine im Wesentlichen gleichbleibende Stärke des Magnetkreises sichergestellt ist.

Vorzugsweise ist mindestens ein Bauteil eines Magnetaktors mittels eines PIM-Verfahrens (Powder-Injection-Moulding-Verfahren) hergestellt. Durch diesen Mehrkomponenten-Pulverspritzprozess anstelle eines Drehprozesses wird die Herstellung von Bauteilen eines Magnetaktors mit geringen Fertigungszeiten und Stückkosten auf einfache Weise erreicht. Das erfindungsgemäße Verfahren kann dabei derart ausgeführt werden, dass in einem ersten Schritt die isolierenden Trennstege hergestellt werden, dann die isolierenden Trennstege in einem Werkzeug mechanisch gehalten werden und anschließend die Sektoren aus weichmagnetischem Material gespritzt werden. Alternativ kann in einem ersten Schritt die Herstellung der weichmagnetischen Sektoren erfolgen. Anschließend werden diese Sektoren in einem Werkzeug angeordnet und mittels eines Magnetfeldes in Position gehalten und in einem anschließenden Schritt die Zwischenräume zwischen den weichmagnetischen Sektoren mit den Trennstegen ausgespritzt werden. Somit kann erfindungsgemäß eine kostengünstige Herstellung eines Bauteils für einen Magnetaktor realisiert werden, wobei das Bauteil dünnwandige, elektrisch nichtleitende Trennstege zwischen weichmagnetischen Sektoren aufweist. Hierdurch kann die Ausbildung von Wirbelströmen, welche den Feldaufbau und Feldabbau entgegenwirken, minimiert werden. Dabei müssen die Trennstege möglichst dünnwandig ausgeführt werden, damit wenig magnetisches Materialvolumen verloren geht, was die erreichbare Magnetkraft negativ beeinflussen würde. Das erfindungsgemäße Verfahren zeigt erstmals eine fertigungstechnische Umsetzung der dabei relativ anspruchsvollen Herstellung auf, da die Trennstege bzw. die weichmagnetischen Sektoren auf Abstand gehalten werden müssen, um jeweils das andere Element mittels eines Spritzvorgangs herstellen zu können. Somit können erfindungsgemäß mittels eines Mehrkomponenten PIM-Verfahrens eines oder mehrere Bauteile eines Magnetaktors, wie z.B. einen Magnetanker oder ein Polkern bzw. Innenpol, oder ein Ventilmantel bzw. Außenpol (Rückschlusselement) hergestellt werden. Besonders bevorzugt können dabei die weichmagnetischen Sektoren mittels eines Metallspritzverfahrens (MIM = Metal Injection Moulding) hergestellt werden. Die isolierenden Trennstege können bevorzugt mittels eines keramischen Spritzverfahrens (CIM-Verfahren, CIM = Ceramic Injection Moulding) hergestellt werden. Die weichmagnetischen Sektoren können mittels einer Magnetkraft in einem Spritzwerkzeug positioniert werden, so dass zwischen ihnen Freiräume für die anzuspritzenden isolierenden Trennstege vorhanden sind. Die Trennstege können mechanisch im Spritzwerkzeug gehalten werden. Hierdurch kann ein sehr wirtschaftliches Herstellungsverfahren erreicht werden.

Durch das erfindungsgemäße Verfahren zur Herstellung eines Bauteils eines Magnetaktors mit einer Vielzahl von Sektoren aus weichmagnetischen Material und einer Vielzahl von isolierenden Trennstegen mittels eines PIM-Prozesses kann wirtschaftlich ein Bauteil hergestellt werden, bei dem die Schaltzeiten und dabei insbesondere die Abschaltzeiten drastisch reduziert sind, wodurch z.B. bei Verwendung in einem Fahrzeug eine deutlich reduzierte Kraftstoffmenge in den Brennraum eingespritzt werden muss. Durch die reduzierte Einspritzmenge wird das Leerlaufverhalten des Motors verbessert und eine verbesserte Mehrfacheinspritzung der Kraftstoffeinspritzventile ermöglicht. Dies führt zu einem deutlich verbesserten Abgasverhalten des Motors.

### Kurze Beschreibung der Zeichnung

Nachfolgend wird ein Ausführungsbeispiel der Erfindung unter Bezugnahme auf die begleitende Zeichnung am Beispiel Magnetanker im Detail beschrieben. In der Zeichnung ist:
- Figur 1: eine schematische Schnittansicht eines Magnetankers eines Kraftstoffeinspritzventils, und
- Figur 2: eine perspektivische Darstellung eines Magnetankers des erfindungsgemäßen Kraftstoffeinspritzventils.

### Ausführungsform der Erfindung

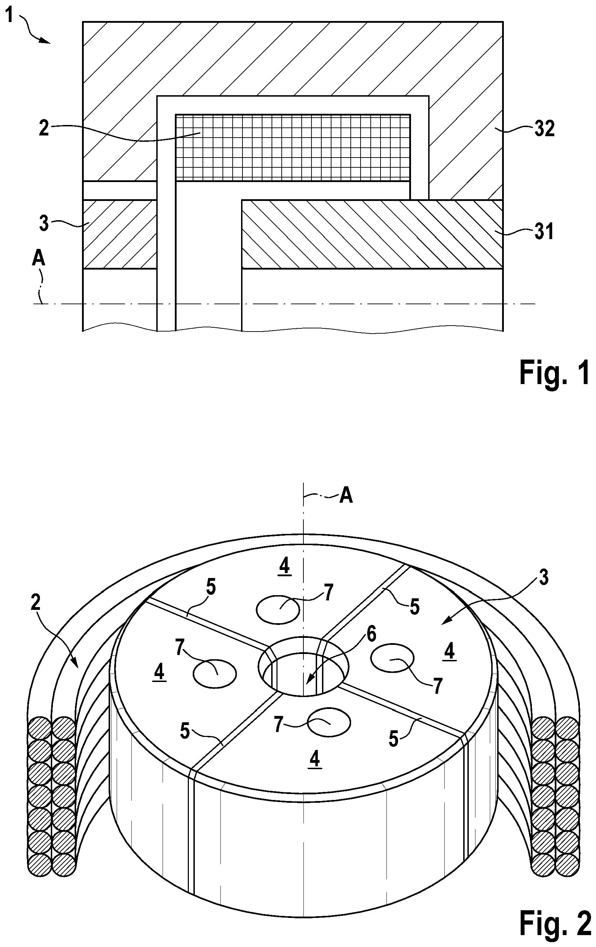

Nachfolgend wird unter Bezugnahme auf die Figuren 1 und 2 ein Kraftstoffeinspritzventil zum Einspritzen von Kraftstoff gemäß einem bevorzugten Ausführungsbeispiel der Erfindung sowie ein Verfahren zur Herstellung eines Magnetankers eines Magnetaktors des Kraftstoffeinspritzventils 1 detailliert beschrieben.

Wie aus der perspektivischen Darstellung von Figur 1 ersichtlich, umfasst das Ventil einen Magnetaktor 1 mit einem Magnetanker 3, einem Polkern 31, einem Ventilmantel 32 als Rückschlusselement, und eine Spule 2, welche den Magnetanker 3 umgibt. Der aus einem weichmagnetischen Material hergestellte Magnetanker 3 weist eine mittige, in einer Achsenrichtung A angeordnete Durchgangsöffnung 6 auf, in der eine hier nicht dargestellte Ventilnadel angeordnet ist. Ferner weist der Magnetanker 3 vier in Achsenrichtung A verlaufende Kraftstofföffnungen 7 auf, von denen jede in einem von vier Sektoren 4 angeordnet ist. Wie aus Fig. 2 weiter ersichtlich, umfasst jeder Sektor 4 in Umfangsrichtung im Wesentlichen ein Viertel des Volumens des Magnetankers 3. Zwischen zwei benachbarten Sektoren 4 ist jeweils ein isolierender Trennsteg 5 aus einem keramischen Material angeordnet, der die angrenzenden Sektoren 4 elektrisch voneinander trennt bzw. isoliert. Die Anzahl der Sektoren 4 bzw.

Trennstege 5 kann alternativ zur hier dargestellten Ausführungsform gemäß einer gewünschten Funktion des Magnetankers 3 im Kraftstoffeinspritzventil 1 entsprechend variiert werden, mindestens sind jedoch zwei Trennstege vorhanden.

Die Herstellung eines Bauteils des Magnetaktors erfolgt durch einen Mehrkomponenten-Pulverspritzprozess (PIM-Prozess). Dabei kann das Bauteil, wie z.B. ein Magnetanker, durch zwei alternative Verfahren hergestellt werden. Da das Bauteil aus zwei Bauteilgruppen, nämlich den Sektoren 4 und den Trennstegen 5, gebildet wird, kann in einem ersten Schritt eine erste der beiden Bauteilgruppen, vorzugsweise mittels eines Spritzverfahrens, hergestellt werden. Dann wird die erste Bauteilgruppe in einem nächsten Schritt in einem Spritzwerkzeug positioniert und anschließend die zweite Bauteilgruppe mittels eines Spritzverfahrens in den Zwischenräumen zwischen der ersten Bauteilgruppe eingespritzt. Wenn die erste Bauteilgruppe die isolierenden Trennstege 5 sind, werden diese mechanisch im Spritzwerkzeug gehalten und dann die weichmagnetischen Sektoren 4 mittels eines Metallspritzverfahrens zwischen die Trennstege 5 gespritzt. Wenn die erste der Bauteilgruppen die weichmagnetischen Sektoren 4 sind, werden die Sektoren 4 mittels eines Metallspritzverfahrens hergestellt und anschließend in dem Spritzwerkzeug mittels eines Magnetfeldes gehalten. Dann werden die Trennstege 5 mittels eines Keramikspritzverfahrens zwischen die Zwischenräume der weichmagnetischen Sektoren 4 gespritzt. Als Spritzverfahren werden vorzugsweise Pulverspritzverfahren eingesetzt.

Durch das erfindungsgemäße Ventil und das erfindungsgemäße Herstellungsverfahren des Bauteils des Magnetaktors wird gemäß den dabei erreichbaren reduzierten Wirbelstromverlusten insbesondere das bei Hochdruckeinspritzventilen gewünschte und erforderliche Dynamikverhalten deutlich verbessert, was zu einem erheblich verbesserten Kraftstoffverbrauch und Emissionsverhalten des Motors beiträgt.

## Patentansprüche

1. Elektromagnetisch betätigbares Ventil, insbesondere zur Einspritzung von Kraftstoff, umfassend einen Magnetaktor mit mehreren Bauteilen, wobei mindestens ein Bauteil des Magnetaktors eine Vielzahl von Sektoren (4) aus weichmagnetischem Material und eine Vielzahl von isolierenden Trennstegen (5) aufweist, wobei zwischen zwei benachbarten Sektoren (4) jeweils ein Trennsteg (5) angeordnet ist, welcher die benachbarten Sektoren (4) elektrisch vollständig voneinander trennt,
**dadurch gekennzeichnet,**
**dass** das Bauteil des Magnetaktors ein Magnetanker (3) ist, der Magnetanker (3) eine mittige Durchgangsöffnung (6) aufweist, in der eine Ventilnadel angeordnet ist, die ein entlang der Achse A axial bewegliches Ventilteil bilden, die Sektoren (4) mit ihren dazwischenliegenden Trennstegen (5) in Umfangsrichtung angeordnet sind und die Trennstege (5) aus einem Keramik umfassenden Material hergestellt sind.

2. Ventil nach Anspruch 1, **dadurch gekennzeichnet, dass** in den Sektoren (4) des Magnetankers (3) Kraftstofföffnungen (7) vorgesehen sind.

3. Ventil nach einem der vorhergehenden Ansprüche, wobei der Magnetanker (3) genau vier Sektoren (4) und vier Trennstege (5) umfasst.

4. Ventil nach einem der vorhergehenden Ansprüche, **dadurch gekennzeichnet, dass** die weichmagnetischen Sektoren (4) des Magnetankers (3) mittels eines Metallspritzverfahrens (MIM = Metal Injection Moulding) hergestellt sind.

5. Ventil nach einem der vorhergehenden Ansprüche, **dadurch gekennzeichnet, dass** das Ventil ein Kraftstoffeinspritzventil ist.

6. Verfahren zur Herstellung eines Bauteils eines Magnetaktors, insbesondere eines Magnetankers (3) oder eines Innenpols oder eines Außenpols,
wobei das Bauteil aus zwei verschiedenen Bauteilgruppen hergestellt ist, wobei eine erste Bauteilgruppe eine Vielzahl von Sektoren (4) aus weichmagnetischem Material umfasst und eine zweite Bauteilgruppe eine Vielzahl von isolierenden Trennstegen (5) umfasst,
wobei in einem ersten Schritt eine erste der Bauteilgruppen hergestellt wird, dann die erste der Bauteilgruppen in einem Spritzwerkzeug angeordnet wird und in einem nächsten Schritt die zweite der Bauteilgruppen gespritzt wird,
wobei, wenn die erste der Bauteilgruppen die isolierenden Trennstege (5) sind, diese mechanisch im Spritzwerkzeug gehalten werden und die weichmagnetischen Sektoren (4) mittels eines Metallspritzverfahrens zwischen die Trennstege (5) gespritzt werden, und
wenn die erste der Bauteilgruppen die weichmagnetischen Sektoren (4) sind, diese mittels magnetischer Kraft im Spritzwerkzeug gehalten werden und die Trennstege (5) mittels eines Keramikspritzverfahrens zwischen die weichmagnetischen Sektoren (4) gespritzt werden.

7. Verfahren nach Anspruch 6, **dadurch gekennzeichnet, dass** die erste und/oder zweite Bauteilgruppe mittels eines Pulverspritzverfahrens hergestellt wird.

## Claims

1. Electromagnetically actuable valve, in particular for fuel injection, comprising a magnetic actuator with multiple components, wherein at least one component of the magnetic actuator has a multiplicity of sectors (4) composed of magnetically soft material and a multiplicity of insulating separating webs (5), wherein, between two adjacent sectors (4), there is arranged in each case one separating web (5) which electrically fully separates the adjacent sectors (4) from one another,
**characterized**
**in that** the component of the magnetic actuator is a magnet armature (3), the magnet armature (3) has a central passage opening (6) in which there is arranged a valve needle, which form a valve part axially movable along the axis A, the sectors (4) with their interposed separating webs (5) are arranged in a circumferential direction, and the separating webs (5) are produced from a material comprising ceramic.

2. Valve according to Claim 1, **characterized in that** fuel openings (7) are provided in the sectors (4) of the magnet armature (3).

3. Valve according to one of the preceding claims, wherein the magnet armature (3) comprises exactly four sectors (4) and four separating webs (5).

4. Valve according to one of the preceding claims, **characterized in that** the magnetically soft sectors (4) of the magnet armature (3) are produced by means of a metal injection moulding (MIM) process.

5. Valve according to one of the preceding claims, **characterized in that** the valve is a fuel injection valve.

6. Method for producing a component of a magnetic actuator, in particular a magnet armature (3) or an inner pole or an outer pole,
wherein the component is produced from two different component groups, wherein a first component group comprises a multiplicity of sectors (4) composed of magnetically soft material and a second component group comprises a multiplicity of insulating separating webs (5),
wherein, in a first step, a first of the component groups is produced, then the first of the component groups is arranged in an injection moulding tool, and in a next step, the second of the component groups is injection-moulded,
wherein, if the first of the component groups is the insulating separating webs (5), these are mechanically held in the injection moulding tool and the magnetically soft sectors (4) are injection-moulded between the separating webs (5) by means of a metal injection moulding process, and,
if the first of the component groups is the magnetically soft sectors (4), these are held by means of magnetic force in the injection moulding tool and the separating webs (5) are injection-moulded between the magnetically soft sectors (4) by means of a ceramic injection moulding process.

7. Method according to Claim 6, **characterized in that** the first and/or second component group is produced by means of a powder injection moulding process.

## Revendications

1. Electrovanne, en particulier pour l'injection de carburant, comprenant un actionneur magnétique avec plusieurs composants, dans laquelle au moins un composant de l'actionneur magnétique présente une multiplicité de secteurs (4) en matériau magnétique doux et une multiplicité de nervures de séparation isolantes (5), dans laquelle une nervure de séparation (5) est chaque fois placée entre deux secteurs voisins (4), et sépare électriquement les secteurs voisins (4) complètement l'un de l'autre, **caractérisée en ce que** le composant de l'actionneur magnétique est un induit magnétique (3), l'induit magnétique (3) présente une ouverture de passage centrale (6), dans laquelle est disposé un pointeau, qui forment une partie de vanne mobile axialement le long de l'axe A, les secteurs (4) sont disposés en direction périphérique avec leurs nervures de séparation (5) placées entre eux et les nervures de séparation (5) sont fabriquées en un matériau contenant de la céramique.

2. Vanne selon la revendication 1, **caractérisée en ce qu'**il est prévu des ouvertures pour carburant (7) dans les secteurs (4) de l'induit magnétique (3).

3. Vanne selon l'une quelconque des revendications précédentes, **caractérisée en ce que** l'induit magnétique (3) comprend exactement quatre secteurs (4) et quatre nervures de séparation (5).

4. Vanne selon l'une quelconque des revendications précédentes, **caractérisée en ce que** les secteurs magnétiques doux (4) de l'induit magnétique (3) sont fabriqués au moyen d'un procédé de projection de métal (MIM = Moulage par Injection de Métal).

5. Vanne selon l'une quelconque des revendications précédentes, **caractérisée en ce que** la vanne est une soupape d'injection de carburant.

6. Procédé de fabrication d'un composant d'un actionneur magnétique, en particulier d'un induit magnétique (3) ou d'un pôle intérieur ou d'un pôle extérieur,
dans lequel le composant est constitué de deux groupes de composants différents, dans lequel un premier groupe de composants comprend une multiplicité de secteurs (4) en matériau magnétique doux et un deuxième groupe de composants comprend une multiplicité de nervures de séparation isolantes (5),
dans lequel on fabrique un premier des groupes de composants dans une première étape, puis on dispose le premier des groupes de composants dans un outil d'injection et dans une étape suivante on injecte le deuxième des groupes de composants,
dans lequel, lorsque le premier des groupes de composants sont les nervures de séparation isolantes (5), celles-ci sont maintenues mécaniquement dans l'outil d'injection et on injecte les secteurs magnétiques doux (4) entre les nervures de séparation (5) au moyen d'un procédé d'injection de métal, et
lorsque le premier des groupes de composants sont les secteurs magnétiques doux (4), ceux-ci sont maintenus dans l'outil d'injection par une force magnétique et on injecte les nervures de séparation (5) entre les secteurs magnétiques doux (4) au moyen d'un procédé d'injection de céramique.

7. Procédé selon la revendication 6, **caractérisé en ce que** l'on fabrique le premier et/ou le deuxième groupe(s) de composants au moyen d'un procédé d'injection de poudre.
